# EUROPEAN PATENT SPECIFICATION

(11) **EP 2 506 203 B1**
(45) Date of publication and mention of the grant of the patent: **19.06.2013**
(21) Application number: 11160260.3
(22) Date of filing: 29.03.2011
(51) Int. Cl.: G06Q 20/00, G06F 3/00, H04M 1/00

(54) **Communication system providing near field communication (NFC) transaction features and related methods**
Kommunikationssystem mit Nahfeldkommunikationstransaktionsmerkmalen und zugehörige Verfahren
Système de communication fournissant des propriétés de transaction de communication de champ proche et procédés apparentés

(43) Date of publication of application: 03.10.2012
(73) Proprietor: Research In Motion Limited, Waterloo, ON N2L 3W8 (CA)
(72) Inventor: Walker, David Ryan, Waterloo Ontario N2L 3W8 (CA); Moosavi, Vahid, Waterloo Ontario N2L 3W8 (CA)
(74) Representative: Noble, Nicholas

(56) References cited:
- EP-A1- 1 837 781
- EP-A1- 2 056 246
- WO-A2-2009/083679
- WO-A2-2010/128442
- US-A1- 2008 078 831
- US-A1- 2010 217 707

## Description

### Technical Field

This application relates to the field of communications, and more particularly, to communication systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification(RFID) standards, using magnetic field induction to enable communication between electronic devices, including mobile wireless communications devices. This short-range high frequency wireless communications technology exchanges data between devices over a short distance, such as only a few centimeters.

US 2010/0217707 discloses a method that includes bringing a mobile device into proximity with an indicium, the indicium adjacent a radio frequency identification (RFID) integrated circuit (IC). The RFID IC is coupled to an antenna. The method further includes the mobile device reading a message from the RFID IC, where the message is transmitted by the RFID IC via the antenna. The method further includes the mobile device responding to the message by opening an electronic wallet function in the mobile device.

US 2008/0078831 discloses a portable device which authorizes a payment transaction from an account associated with the portable device. The portable device comprises a communication system, such as a near field communication (NFC) system, for communicating with a transaction system of a merchant or other receiving entity, a user interface, a memory storing account information for each of a plurality of accounts, and a transaction application. The transaction application applies at least one predetermined selection rule to the plurality of accounts to determine a selected subset of the plurality of accounts. A display of the user interface displays, under control of the transaction application, a plurality of transaction option indicators. Each transaction option indicator, which may be text or graphic, represents a one of the accounts within the selected subset of accounts. The transaction application prompts user selection of a selected one of the transaction option indicators. The transaction application drives the communication system to exchange data with the transaction system of a merchant or other receiving entity to initiate a payment to the merchant. The payment being from the payment account associated with the selected one of the transaction option indicators.

### Brief Description of the Drawings

FIG. 1 is a schematic block diagram of a communication system in accordance with an example embodiment.

FIG. 2 is a flow diagram illustrating method aspects associated with the system of FIG. 1.

FIGS. 3 and 4 are schematic block diagrams illustrating example NFC device configurations for use with the system of FIG. 1.

FIGS. 5 and 6 are front views of an example implementation of the mobile wireless communications device of the system of FIG. 1 illustrating account selection in accordance with example embodiments.

FIG. 7 is a schematic block diagram illustrating example components of a mobile wireless communications device that may be used with the device of FIG. 1.

### Detailed Description

Aspects and features of the claimed subject matter are set out in the appended claims.

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout.

Generally speaking, a communication system is disclosed herein which may include a transaction terminal configured to perform a transaction based upon receiving account information, at least one first near field communication (NFC) device, and a mobile wireless communication device. The mobile wireless communication device may include a second NFC device configured to communicate with the at least one first NFC device upon being swiped therewith, and a memory configured to store account information associated with a plurality of different accounts and store respective account swipe patterns for the plurality of different accounts, where each account swipe pattern comprising at least one of a set time or a set number of swipes. The mobile wireless communications device may further include a controller coupled to the memory and second NFC device and configured to detect a swipe pattern, determine whether the detected swipe pattern corresponds to one of the plurality of stored account swipe patterns, determine a respective account based upon the determined corresponding stored account swipe pattern, and communicate the associated account information for the determined respective account to the transaction terminal.

More particularly, the at least one first NFC device may have a unique identification (UID) associated therewith. As such, the controller may be further configured to receive the UID from the at least one fist NFC device via the second NFC device, validate the received UID, and determine the respective account based upon validation of the UID. In addition, the plurality of different accounts may comprise payment accounts, and the at least one first NFC device may have a spending limit associated therewith. As such, the controller may be further configured to communicate payment account information for transactions below the spending limit. In some example embodiments, the plurality of different accounts may comprise security access accounts.

The at least one first NFC device may comprise a plurality of first NFC devices each associated with a different respective payment account category. By way of example, the different account categories may correspond to personal or business payment account categories. Also by way of example, the payment account categories may correspond to different credit card types. Furthermore, the set number of swipes may comprise a plurality of swipes.

The transaction terminal may be further configured to communicate via NFC, and the controller may be configured to communicate the respective account information for the selected account to the transaction terminal via the second NFC device. Additionally, the at least one first NFC device may comprise at least one passive NFC device.

A related mobile wireless communication device, such as the one described briefly above, and a related communication method are also provided. The method may include storing respective account information for a plurality of different accounts in a memory of a mobile wireless communications device, and storing respective account swipe patterns for the plurality of different accounts in the memory, where each account swipe pattern comprises at least one of a set time or a set number of swipes. The method may further include causing the mobile wireless communication device to communicate with at least one near field communication (NFC) device based upon swiping therewith and determining, at the mobile wireless communications device, an actual swipe pattern with the at least one NFC device based upon the NFC communications. The method may also include determining, at the mobile wireless communications device, a matching account swipe pattern between the actual swipe pattern and the plurality of stored account swipe patterns, as well as determining, at the mobile wireless communications device, a respective account based upon the matching account swipe pattern. Also, the method may include communicating the respective account information from the mobile wireless communications device to a transaction terminal.

A related computer-readable medium may have computer-executable instructions for causing a mobile wireless communications device to perform steps including storing respective account information for a plurality of different accounts in a memory of the mobile wireless communications device, and storing respective account swipe patterns for the plurality of different accounts in the memory, where each account swipe pattern comprising at least one of a set time or a set number of swipes. The steps may further include communicating with at least one NFC device based upon swiping therewith, determining an actual swipe pattern with the at least one NFC device based upon the NFC communications, determining a matching account swipe pattern between the actual swipe pattern and the plurality of stored account swipe patterns, determining a respective account based upon the matching account swipe pattern, and communicating the respective account information to the transaction terminal.

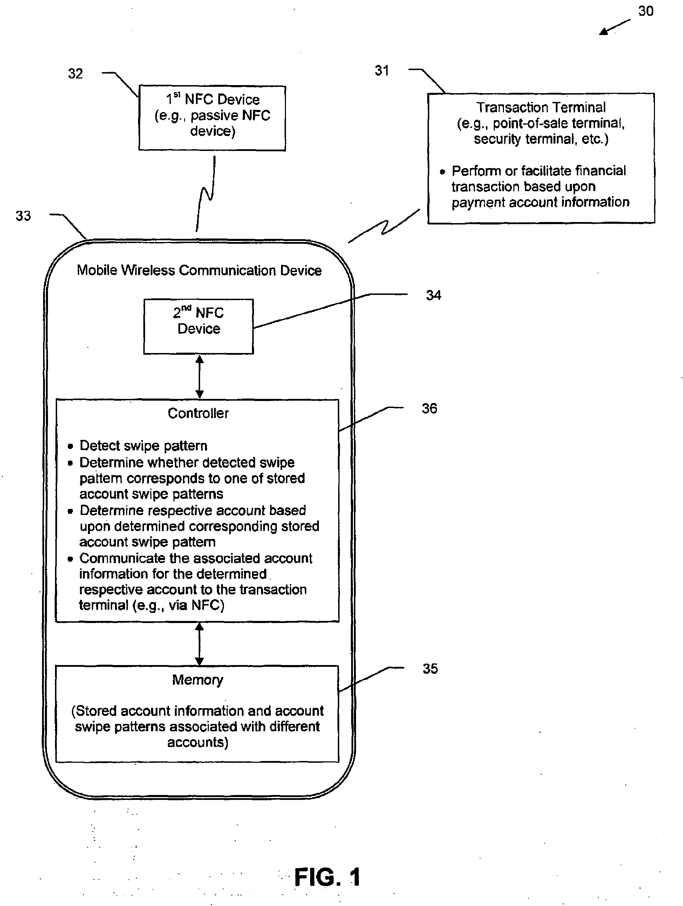

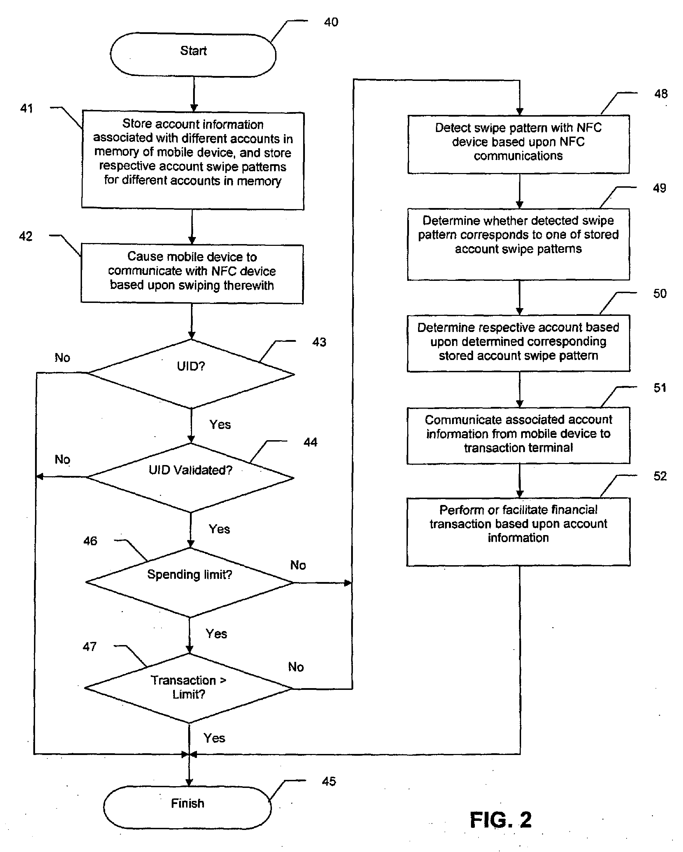

Referring initially to FIGS. 1 through 6, a Communication system **30** and related method aspects are first described. Generally speaking, the system **30** advantageously implements near field communication (NFC) functionality to facilitate transactions, such as financial or security transactions, for example. By way of background, NFC is a short-range wireless communications technology in which NFC-enabled devices are "swiped," "bumped" or otherwise moved in close proximity to communicate. In a non-limiting example implementation, NFC may operate at 13.56 MHz and with an effective range of about 10cm, but other suitable versions of near-field communication which may have different operating frequencies, effective ranges, etc., for example, may also be used.

Some legacy NFC hardware may prevent mobile wireless communication devices (also referred to as "mobile devices" herein) with NFC capabilities from automatically providing the appropriate account, program or protocol during transactions. For example, if multiple payment options, loyalty cards, transit passes, secure access badges, etc., are available for use on a given NFC-enabled mobile device, there may be no way of automatically selecting the appropriate protocol, payment account (e.g., a credit card account), etc. Instead, the user may be required to manually select an intended program, protocol or payment account before swiping, which in many use cases is not a preferable interaction. The system **30** may advantageously be used to help streamline the process of selecting the appropriate account, program or protocol for a desired transaction through the use of NFC.

More particularly, the system **30** illustratively includes a transaction terminal **31** configured to perform a transaction (e.g., a financial transaction, permit entry to a secure area, etc.) based upon receiving account information, at least one or more near field communication (NFC) devices **32,** and a mobile device **33.** Example mobile devices **33** may include portable or personal media players (e.g., MP3 players, video players, etc.), remote controls (e.g., television or stereo remotes, vehicle remotes, etc.), portable gaming devices, portable or mobile telephones, smartphones, tablet computers, electronic readers (e-readers), etc. By way of example, the first NFC device **32** may be a passive NFC device (e.g., a NFC tag), and may include a NFC transceiver and a memory for storing data. The mobile device **33** illustratively includes a second NFC device **34** that may comprise an active NFC device which provides a field for powering the first NFC device **32** and communicating therewith. However, the first NFC device **32** may be active, and the second NFC device **34** may be passive, in some embodiments.

The second NFC device **34** is configured to communicate with the first NFC device **32** upon being swiped therewith (which may involve physical contact in some embodiments, or may only involve the first and second NFC devices coming within NFC communication range of one another with or without physical contact in other embodiments). The mobile device **33** further illustratively includes a memory **35** and a controller **36** coupled to the second NFC device **34** and the memory **35.** The controller **36** may be implemented using a combination of hardware (e.g., microprocessor, memory, etc.) and software components, such as a computer-readable medium having computer-executable instructions for performing the operations described herein.

Beginning at Block **40,** the memory **35** is configured to store account information associated with a plurality of different accounts, and store respective account swipe patterns for the plurality of different accounts, at Block **41.** In particular, each account swipe pattern may comprise at least one of the following: a set time and a set number of swipes. That is, the duration of a swipe (e.g., how long the first and second NFC devices **32, 34** remain in NFC communication range), as well as the number of swipes between the first and second NFC devices, may be used to readily select an appropriate account for a given transaction.

When the first NFC devic**e 32** and the mobile devic**e 33** (i.e., the second NFC devic**e 34)** are swiped or bumped together, which causes the first NFC device **32** and the second NFC device **34** to communicate with one another (Block **42),** the controller **36** may retrieve data stored by the first NFC device **32.** Generally speaking, the first NFC device **32** stores data that indicates a particular type or category of account to the controller **36,** so that upon swiping of the first NFC device the controller may make an appropriate determination as to which of a plurality of different accounts that it is configured to use for a transaction. By way of example, the different accounts may relate to different bank or credit accounts (e.g., credit card accounts) for financial transactions, different security accounts (e.g., different security badges) for different locations, different reward programs, gift cards, etc.

In some implementations, the first NFC device **32** may be a public device located in a public area, such as near a point-of-sale (POS) terminal, in a public transportation station (e.g., bus, train, subway, taxi, airport, etc.), or near a security checkpoint (e.g., a building entrance, an arena, etc.). In this way, various NFC-enabled mobile devices **33** may swipe the first NFC device **32** for a set time or in a set pattern to select a desired account type for an ensuing transaction with the transaction terminal **31.** For example, the first NFC device **32** may store a universal identification (ID), which indicates to the controller **36** a certain type or category of credit card (e.g., MasterCard, etc.) to be used, or simply credit cards in general. The universal ID may also generally indicate that a security account is to be selected or enabled in some example embodiments.

In other example implementations, the first NFC device **32** may be a private device associated with a respective user or mobile device **33.** In such case, a unique identification (UID) may be associated with the first NFC device **32,** and the controller **36** may be further configured to receive the UID from the first NFC device **32** via the second NFC device **34** and validate the received UID, at Blocks **43-44.** That is, the controller **36** may be configured to perform account selection and perform a given transaction upon validation that the first NFC device **32** is indeed the device that is paired with the mobile device **33.** If the UID is not validated, then the controller **36** may terminate the transaction process, at Block **45.** In some example embodiments, the UID may also be associated with a specific account, such as to indicate that a given credit card account should be used as a default unless otherwise changed, for example.

Other data that may be associated with the first NFC device **32** may include a spending limit for financial transactions, for example. If a spending limit is communicated from the first NFC device **32,** the controller **36** may verify that the desired financial transaction cost does not exceed the transaction limit, at Blocks **46-47.** If it does, the controller **36** may terminate the transaction process. That is, the controller **36** may be configured to communicate account information to the transaction terminal **31** only for transactions below the spending limit. This particular feature may be advantageous where private NFC devices **32** (e.g., NFC tags) are given to children, allowing parents to limit an amount that the children may spend on various transactions, for example.

The controller **36** is further configured to determine or detect an actual swipe pattern with the first NFC device **32,** at Block **48.** As noted above, this may include a time or duration that the first and second NFC device **32, 33** remain within NFC communication range, and/or a number of times that the first and second NFC devices are swiped together. The controller **36** may also determine whether the detected swipe pattern corresponds to one of the plurality of stored account swipe patterns in the memory **35,** at Block **49,** determine a respective account based upon the determined corresponding stored account swipe pattern, at Block **50,** and communicate the associated account information for the determined respective account to the transaction terminal **31,** at Block **51.** This may be done via NFC communication with the transaction terminal **31,** or in some applications via another wireless communications format (e.g., Bluetooth, WiFi, cellular, etc.) As noted above, the transaction terminal **31** may then perform the desired transaction using the respective account, at Block **52,** which may thereby help simplify or expedite the transaction process.

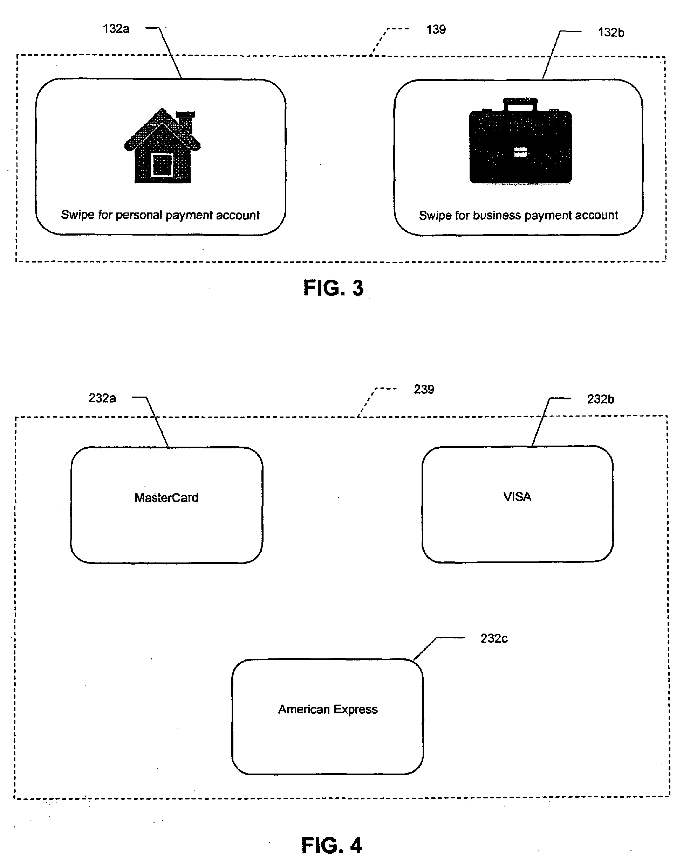

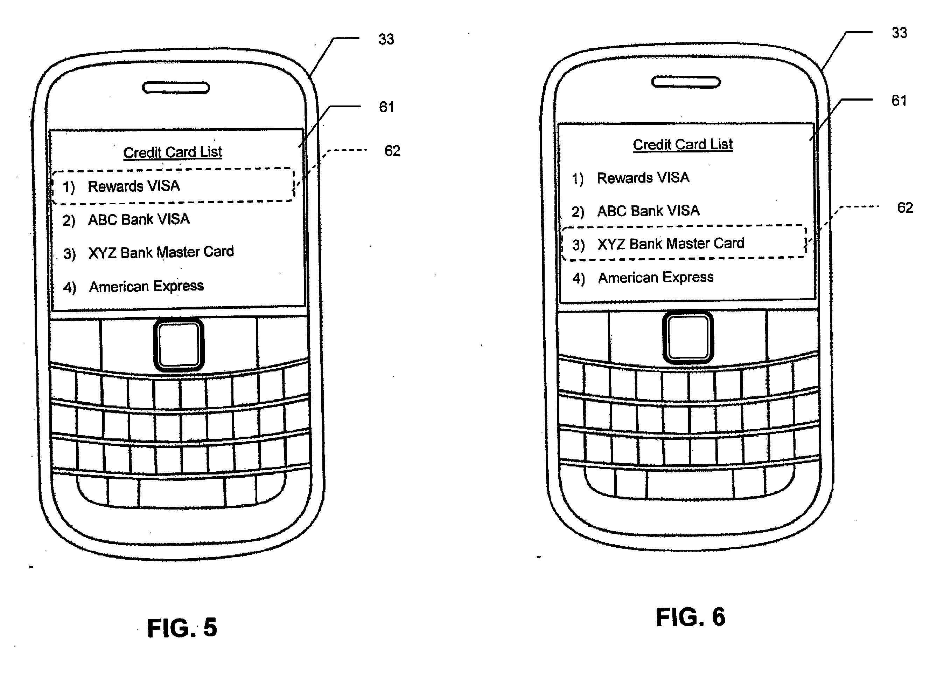

In the example of FIG. 3, a plurality of first NFC devices **132a, 132b** (here, passive NFC tags) are located in an area **139,** which may be next to a POS terminal (such as upstream from the POS terminal in a checkout line) which relate to personal or business payment account categories. More particularly, the NFC tag **132a** is a general or public NFC tag that corresponds to a personal payment account (as indicated by a home or house icon), and the NFC tag **132b** is a general or public NFC tag that corresponds to a business payment account (indicated by a briefcase icon). Assuming for the present example that the personal payment NFC device **132a** is swiped, the controller **36** then knows to select from among the configured personal payment credit card accounts, which in the examples of FIGS. 5-6 are four personal credit card accounts, namely (1) "Rewards VISA", (2) "ABC Bank VISA", (3) "XYZ Bank MasterCard", and (4) "American Express". These accounts may be ordered or listed in various ways, such as by user selection, or in the order the cards were added to or configured on the mobile device **33,** for example.

In the example of FIG. 5, the "Rewards VISA" may be considered the default personal credit card account used for financial transactions since it is the first listed on a display **61,** as indicated by a dashed highlight box **62.** By holding the second NFC device **34** within NFC communication range of the NFC tag **132a** for a set time, the user may advantageously scroll or advance through the list of credit card accounts to select a different account. For example, for every one-second period that the NFC tag **132a** and the second NFC device **34** are in NFC communication range, the controller **36** may move to a next credit card in the list. So, as seen in FIG. 6, the NFC tag **132a** and the second NFC device **34** are in NFC range for three seconds, because the controller **36** has advanced to the third card in the list (i.e., the XYZ Bank MasterCard). Removing the second NFC device from communication range of the NFC tag **132a** may select the XYZ Bank MasterCard. However, other periods of time beside one-second intervals may also be used in different embodiments. In another example embodiment, the mobile device **34** may be swiped with the NFC tag **132a** three times in a row (i.e., brought in-and-out of NFC communication range three times) to achieve the same result. In still further example embodiments, a combination of duration and number of swipes may be used for account determination.

In the example of FIG. 4, a plurality of NFC tags **232a, 232b,** and **232c** are positioned in an area **239,** which may be the area adjacent a POS terminal. Here, the NFC tags **232a-232c** correspond to different credit card types, namely MasterCard, VISA, and American Express, respectively. Thus, using the prior example, if the VISA NFC tag **232b** is swiped twice (or the mobile device **33** is held in NFC communication range with the VISA NFC tag **232b** for two seconds), then the ABC Bank VISA card may be selected rather than the Rewards VISA card.

The system **30** may therefore advantageously utilize one or more NFC devices **32** to place a mobile device into an appropriate mode for a subsequent transaction prior to communicating with a NFC-enabled transaction terminal **31** (although the transaction terminal may be swiped first in some embodiments). This may advantageously allow the second NFC device **34** to remain in a tag reader/writer mode (i.e., requiring relatively low power usage), and also allowing the second NFC device to read/write passive tags (e.g., smart posters, paint with accessories, location based docs, etc.) automatically without user interface interaction. Then, when an instance occurs where the second NFC device **34** should be in tag emulation mode, a first NFC device **32** corresponding to an appropriate program, protocol, category, etc., may be swiped, placing the second NFC device into a corresponding tag emulation mode.

In accordance with an example financial transaction use case, when it is desired to make a payment at a POS terminal, several NFC tags corresponding to various payment options, reward or loyalty accounts, etc., available at that location. Then, when a NFC tag corresponding to a given card, etc. is swiped, a corresponding image may appear on a display of the device, so that the user is informed which credit card account should be used for the transaction upon swiping the POS terminal. Swiping the passive tags corresponding to each account may temporarily place the mobile device into a tag emulation mode, and set to the corresponding account and associated program (e.g., a VISA payment application, etc.), as well as an appropriate protocol (e.g., NFC type A, B, F, etc.) for the transaction. This may advantageously reduce the need for a user to launch specific applications and choose specific options each time he or she wants to make a purchase, thus speeding up the transaction.

In accordance with another example use case, a mobile device may be used in tag emulation mode for access control. More particularly, it may be cumbersome for a user to manually select an access control mode on his or her mobile device every time entry to a secure location is desired. Instead, a passive tag may be located at each access terminal, allowing a mobile device to first swipe the tag, automatically placing the mobile device into access control mode based upon the data stored on the NFC tag, and then swipe the access terminal to gain access. Again, multiple swipes or set times may be used to select different security badge or account credentials, for example. The passive tag may also be a private NFC tag that a user carries with him (e.g., on a holster, in a watch, wallet, etc.), so that the user may first tap the NFC tag and then the access terminal, rather than selecting the appropriate mode through an on screen menu, etc.

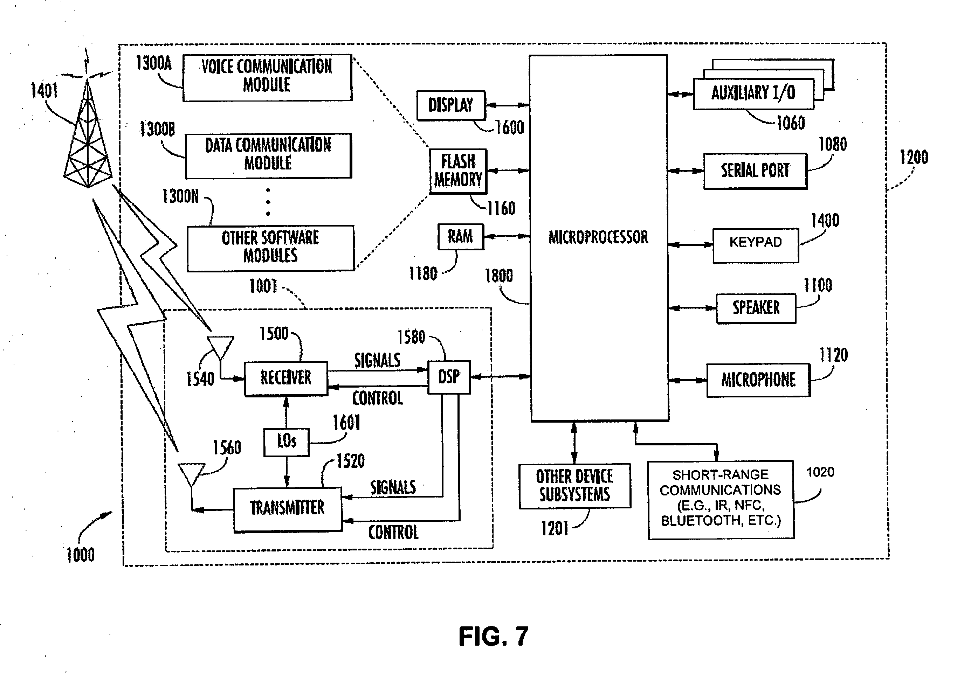

Example components of a mobile wireless communications device **1000** that may be used in accordance with the above-described embodiments are further described below with reference to FIG. 7. The device **1000** illustratively includes a housing **1200,** a keyboard or keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 7. These include a communications subsystem **1001;** a short-range communications subsystem **1020;** the keypad **1400** and the display **1600,** along with other input/output devices **1060, 1080,** 1100 and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A communication system (30) comprising:
a transaction terminal (31) configured to perform a transaction based upon receiving account information;
at least one first near field communication (NFC) device (32); and
a mobile wireless communication device (33) comprising
a second NFC device (34) configured to communicate with said at least one first NFC device upon being swiped therewith,
a memory (35) configured to store account information associated with a plurality of different accounts, and store respective account swipe patterns for the plurality of different accounts, each account swipe pattern comprising at least one of: a time duration that the first and second NFC devices remain in NFC communication range or a number of swipes, at least two, between the first and second NFC devices in a row, and
a controller (36) coupled with said memory and second NFC device, the controller being configured to detect a swipe pattern,
determine whether the detected swipe pattern corresponds to one of the plurality of stored account swipe patterns,
determine a respective account based upon the determined corresponding stored account swipe pattern, and
communicate the associated account information for the determined respective account to said transaction terminal.

2. The communication system (30) of Claim 1 wherein said at least one first NFC device (32) has a unique identification (UID) associated therewith; and wherein said controller (36) is further configured to receive the UID from said at least one first NFC device via said second NFC device (34), validate the received UID, and determine the respective account based upon validation of the UID.

3. The communication system (30) of Claim 1 wherein the plurality of different accounts comprises a plurality of different payment accounts; wherein said at least one first NFC device (32) has a spending limit associated therewith; and wherein said controller (36) is further configured to communicate payment account information for transactions below the spending limit.

4. The communication system (30) of Claim 1 wherein the plurality of different accounts comprises a plurality of different payment accounts; and wherein said at least one first NFC device (32) comprises a plurality of first NFC devices each associated with a different respective payment account category.

5. The communication system (30) of Claim 1 wherein the number of swipes comprises a plurality of swipes.

6. The communication system (30) of Claim 1 wherein the plurality of different accounts comprises a plurality of different security access accounts.

7. The communication system (30) of Claim 1 wherein said transaction terminal (31) is further configured to communicate via NFC; and wherein said controller (36) is configured to communicate the associated account information for the determined respective account to said transaction terminal via said second NFC device (34).

8. A mobile wireless communication device for use with a transaction terminal configured to perform a transaction based upon receiving account information and at least one first near field communication (NFC) device, the mobile wireless communications device comprising:
a second NFC device configured to communicate with the at least one first NFC device upon being swiped therewith;
a memory configured to store account information associated with a plurality of different accounts, and store respective account swipe patterns for the plurality of different accounts, each account swipe pattern comprising at least one of: a time duration that the first and second NFC devices remain in NFC communication range or a number of swipes, at least two, between the first and second NFC devices in a row; and
a controller coupled with said memory and second NFC device, the controller being configured to
detect a swipe pattern,
determine whether the detected swipe pattern corresponds to one of the plurality of stored account swipe patterns,
determine a respective account based upon the determined corresponding stored account swipe pattern, and
communicate the associated account information for the determined respective account to the transaction terminal.

9. The mobile wireless communication device of Claim 8 wherein the at least one first NFC device has a unique identification (UID) associated therewith; and wherein said controller is further configured to receive the UID from the at least one first NFC device via said second NFC device, validate the received UID, and determine the respective account based upon validation of the UID.

10. The mobile wireless communication device of Claim 8 wherein the plurality of different accounts comprises a plurality of different payment accounts; wherein said at least one first NFC device has a spending limit associated therewith; and wherein said controller is further configured to communicate payment account information for transactions below the spending limit.

11. The mobile wireless communication device of Claim 8 wherein the plurality of different accounts comprises a plurality of different payment accounts; wherein the at least one first NFC device comprises a plurality of first NFC devices each associated with a different respective payment account category; and wherein the different payment account categories correspond to personal or business payment account categories.

12. A communication method comprising:
storing account information associated with a plurality of different accounts in a memory of a mobile wireless communications device, and storing respective account swipe patterns for the plurality of different accounts in the memory, each account swipe pattern comprising at least one of: a time duration that the first and second NFC devices remain in NFC communication range or a number of swipes, at least two, between the first and second NFC devices in a row;
causing the mobile wireless communication device to communicate with at least one near field communication (NFC) device based upon swiping therewith;
detecting, at the mobile wireless communications device, a swipe pattern with the at least one NFC device based upon the NFC communications;
determining, at the mobile wireless communications device, whether the detected swipe pattern corresponds to one of the plurality of stored account swipe patterns;
determining, at the mobile wireless communications device, a respective account based upon the determined corresponding stored account swipe pattern; and
communicating the associated account information for the determined respective account from the mobile wireless communications device to a transaction terminal.

13. The method of Claim 12 further comprising facilitating a transaction with the transaction terminal based upon the account information.

14. The method of Claim 12 wherein the at least one NFC device has a unique identification (UID) associated therewith; and further comprising communicating the UID from the at least one NFC device to the mobile wireless communication device and validating the received UID at the mobile wireless communications device; and wherein determining the respective account further comprises determining the respective account based upon validation of the UID.

15. The method of Claim 12 wherein the plurality of different accounts comprises a plurality of different payment accounts; wherein the at least one NFC device has a spending limit associated therewith; and wherein communicating further comprises communicating payment account information for transactions below the spending limit.

## Patentansprüche

1. Ein Kommunikationssystem (30), das aufweist:
ein Transaktions-Terminal (31), das konfiguriert ist zum Durchführen einer Transaktion basierend auf einem Empfangen von Kontoinformation;
zumindest eine erste Nahfeldkommunikations(NFC - Near Field Communication)-Vorrichtung (32); und
eine mobile drahtlose Kommunikationsvorrichtung (33), die aufweist
eine zweite NFC-Vorrichtung (34), die konfiguriert ist zum Kommunizieren mit der zumindest einen ersten NFC-Vorrichtung, wenn sie mit dieser in Kontakt tritt,
einen Speicher (35), der konfiguriert ist zum Speichern von Kontoinformation, die mit einer Vielzahl von verschiedenen Konten assoziiert ist, und Speichern von jeweiligen Konto-Kontakt-Mustern für die Vielzahl von verschiedenen Konten, wobei jedes Konto-Kontakt-Muster zumindest eines aufweist aus: eine Zeitdauer, während der die ersten und zweiten NFC-Vorrichtungen in einem NFC-Kommunikationsbereich bleiben, oder eine Anzahl von Kontakten, zumindest zwei, zwischen den ersten und zweiten NFC-Vorrichtungen in einer Reihe, und
eine Steuervorrichtung (36), die mit dem Speicher und der zweiten NFC-Vorrichtung gekoppelt ist, wobei die Steuervorrichtung konfiguriert ist zum
Erfassen eines Kontakt-Musters,
Bestimmen, ob das erfasste Kontakt-Muster einem aus der Vielzahl von gespeicherten Konto-Kontakt-Mustern entspricht, Bestimmen eines entsprechenden Kontos basierend auf dem bestimmten entsprechenden gespeicherten Konto-Kontakt-Muster, und
Kommunizieren der assoziierten Kontoinformation für das bestimmte entsprechende Konto an das Transaktions-Terminal.

2. Das Kommunikationssystem (30) gemäß Anspruch 1, wobei die zumindest eine erste NFC-Vorrichtung (32) eine damit assoziierte eindeutige Identifikation (UID - unique identification) hat; und wobei die Steuervorrichtung (36) weiter konfiguriert ist zum Empfangen der UID von der zumindest einen ersten NFC-Vorrichtung über die zweite NFC-Vorrichtung (34), Validieren der empfangenen UID, und Bestimmen des entsprechenden Kontos basierend auf der Validierung der UID.

3. Das Kommunikationssystem (30) gemäß Anspruch 1, wobei die Vielzahl von verschiedenen Konten eine Vielzahl von verschiedenen Zahlungskonten aufweist; wobei die zumindest eine erste NFC-Vorrichtung (32) eine damit assoziierte Ausgabebegrenzung hat; und wobei die Steuervorrichtung (36) weiter konfiguriert ist zum Kommunizieren von Zahlungskontoinformation für Transaktionen unterhalb der Ausgabebegrenzung.

4. Das Kommunikationssystem (30) gemäß Anspruch 1, wobei die Vielzahl von verschiedenen Konten eine Vielzahl von verschiedenen Zahlungskonten aufweist; und wobei die zumindest eine erste NFC-Vorrichtung (32) eine Vielzahl von ersten NFC-Vorrichtungen aufweist, die jeweils mit einer anderen jeweiligen Zahlungskontokategorie assoziiert sind.

5. Das Kommunikationssystem (30) gemäß Anspruch 1, wobei die Anzahl von Kontakten eine Vielzahl von Kontakten aufweist.

6. Das Kommunikationssystem (30) gemäß Anspruch 1, wobei die Vielzahl von verschiedenen Konten eine Vielzahl von verschiedenen Sicherheitszugriffskonten aufweist.

7. Das Kommunikationssystem (30) gemäß Anspruch 1, wobei das Transaktions-Terminal (31) weiter konfiguriert ist zum Kommunizieren über NFC; und wobei die Steuervorrichtung (36) konfiguriert ist zum Kommunizieren der assoziierten Kontoinformation für das bestimmte jeweilige Konto an das Transaktions-Terminal über die zweite NFC-Vorrichtung (34).

8. Eine mobile drahtlose Kommunikationsvorrichtung zur Verwendung mit einem Transaktions-Terminal, das konfiguriert ist zum Durchführen einer Transaktion basierend auf einem Empfangen von Kontoinformation, und zumindest einer ersten Nahfeldkommunikations(NFC - Near Field Communication)-Vorrichtung, wobei die mobile drahtlose Kommunikationsvorrichtung aufweist:
eine zweite NFC-Vorrichtung, die konfiguriert ist zum Kommunizieren mit der zumindest einen ersten NFC-Vorrichtung, wenn sie mit dieser in Kontakt tritt;
einen Speicher, der konfiguriert ist zum Speichern von Kontoinformation, die mit einer Vielzahl von verschiedenen Konten assoziiert ist, und Speichern von jeweiligen Konto-Kontakt-Mustern für die Vielzahl von verschiedenen Konten, wobei jedes Konto-Kontakt-Muster zumindest eines aufweist aus: eine Zeitdauer,
während der die ersten und zweiten NFC-Vorrichtungen in einem NFC-Kommunikationsbereich bleiben, oder eine Anzahl von Kontakten,
zumindest zwei, zwischen den ersten und zweiten NFC-Vorrichtungen in einer Reihe; und
eine Steuervorrichtung, die mit dem Speicher und der zweiten NFC-Vorrichtung gekoppelt ist, wobei die Steuervorrichtung konfiguriert ist zum
Erfassen eines Kontakt-Musters,
Bestimmen, ob das erfasste Kontakt-Muster einem aus der Vielzahl von gespeicherten Konto-Kontakt-Mustern entspricht, Bestimmen eines entsprechenden Kontos basierend auf dem bestimmten entsprechenden gespeicherten Konto-Kontakt-Muster, und
Kommunizieren der assoziierten Kontoinformation für das bestimmte entsprechende Konto an das Transaktions-Terminal.

9. Die mobile drahtlose Kommunikationsvorrichtung gemäß Anspruch 8, wobei die zumindest eine erste NFC-Vorrichtung eine damit assoziierte eindeutige Identifikation (UID - unique identification) hat; und wobei die Steuervorrichtung weiter konfiguriert ist zum Empfangen der UID von der zumindest einen ersten NFC-Vorrichtung über die zweite NFC-Vorrichtung, Validieren der empfangenen UID, und Bestimmen des entsprechenden Kontos basierend auf der Validierung der UID.

10. Die mobile drahtlose Kommunikationsvorrichtung gemäß Anspruch 8, wobei die Vielzahl von verschiedenen Konten eine Vielzahl von verschiedenen Zahlungskonten aufweist; wobei die zumindest eine erste NFC-Vorrichtung eine damit assoziierte Ausgabebegrenzung hat; und wobei die Steuervorrichtung weiter konfiguriert ist zum Kommunizieren von Zahlungskontoinformation für Transaktionen unterhalb der Ausgabebegrenzung.

11. Die mobile drahtlose Kommunikationsvorrichtung gemäß Anspruch 8, wobei die Vielzahl von verschiedenen Konten eine Vielzahl von verschiedenen Zahlungskonten aufweist; wobei die zumindest eine erste NFC-Vorrichtung eine Vielzahl von ersten NFC-Vorrichtungen aufweist, die jeweils mit einer anderen jeweiligen Zahlungskontokategorie assoziiert sind; und wobei die verschiedenen Zahlungskontokategorien persönlichen oder Firmen-Zahlungskontokategorien entsprechen.

12. Ein Kommunikationsverfahren, das aufweist:
Speichern von Kontoinformation, die mit einer Vielzahl von verschiedenen Konten assoziiert ist, in einem Speicher einer mobilen drahtlosen Kommunikationsvorrichtung und Speichern von jeweiligen Konto-Kontakt-Mustern für die Vielzahl von verschiedenen Konten in dem Speicher, wobei jedes Konto-Kontakt-Muster zumindest eines aufweist aus: eine Zeitdauer, während der die ersten und zweiten NFC-Vorrichtungen in einem NFC-Kommunikationsbereich bleiben, oder eine Anzahl von Kontakten,
zumindest zwei, zwischen den ersten und zweiten NFC-Vorrichtungen in einer Reihe;
Veranlassen der mobilen drahtlosen Kommunikationsvorrichtung zum Kommunizieren mit zumindest einer Nahfeldkommunikations(NFC - Near Field Communication)-Vorrichtung basierend auf einem Kontakt mit dieser; Erfassen, an der mobilen drahtlosen Kommunikationsvorrichtung, eines Kontakt-Musters mit der zumindest einen NFC-Vorrichtung basierend auf den NFC-Kommunikationen;
Bestimmen, an der mobilen drahtlosen Kommunikationsvorrichtung, ob das erfasste Kontakt-Muster einem aus der Vielzahl von gespeicherten Konto-Kontakt-Mustern entspricht;
Bestimmen, an der mobilen drahtlosen Kommunikationsvorrichtung, eines entsprechenden Kontos basierend auf dem bestimmten entsprechenden gespeicherten Konto-Kontakt-Muster; und
Kommunizieren der assoziierten Kontoinformation für das bestimmte entsprechende Konto von der mobilen drahtlosen Kommunikationsvorrichtung an ein Transaktions-Terminal.

13. Das Verfahren gemäß Anspruch 12, das weiter aufweist ein Erleichtern einer Transaktion mit dem Transaktions-Terminal basierend auf der Kontoinformation.

14. Das Verfahren gemäß Anspruch 12, wobei die zumindest eine NFC-Vorrichtung eine damit assoziierte eindeutige Identifikation (UID - unique identification) hat; und das weiter aufweist ein Kommunizieren der UID von der zumindest einen NFC-Vorrichtung an die mobile drahtlose Kommunikationsvorrichtung und Validieren der empfangenen UID an der mobilen drahtlosen Kommunikationsvorrichtung; und wobei das Bestimmen des entsprechenden Kontos weiter aufweist ein Bestimmen des entsprechenden Kontos basierend auf der Validierung der UID.

15. Das Verfahren gemäß Anspruch 12, wobei die Vielzahl von verschiedenen Konten eine Vielzahl von verschiedenen Zahlungskonten aufweist; wobei die zumindest eine NFC-Vorrichtung eine damit assoziierte Ausgabebegrenzung hat; und wobei das Kommunizieren weiter aufweist ein Kommunizieren von Zahlungskontoinformation für Transaktionen unterhalb der Ausgabebegrenzung.

## Revendications

1. Système de communication (30) comprenant :
un terminal de transaction (31) configuré pour effectuer une transaction sur la base de la réception d'informations de comptes ;
au moins un premier dispositif de communication en champ proche (NFC) (32) ; et
un dispositif de communication sans fil mobile (33) qui comprend :
un deuxième dispositif NFC (34) configuré pour communiquer avec ledit au moins un premier dispositif NFC lorsqu'il est glissé sur celui-ci,
une mémoire (35) configurée pour stocker des informations de comptes associées à une pluralité de différents comptes, et pour stocker des motifs de glissement de comptes respectifs pour la pluralité de différents comptes, chaque motif de glissement de compte comprenant au moins un élément parmi : une durée au cours de laquelle les premier et deuxième dispositifs NFC restent dans une plage de communication NFC ou un certain nombre de glissement, au moins deux, entre les premier et deuxième dispositifs NFC dans une rangée, et
un contrôleur (36) couplé à ladite mémoire et audit deuxième dispositif NFC, le contrôleur étant configuré :
pour détecter un motif de glissement,
pour déterminer si le motif de glissement détecté correspond à l'un de la pluralité de motifs de glissement de comptes stockés,
pour déterminer un compte respectif sur la base du motif de glissement de compte stocké correspondant déterminé, et
pour communiquer les informations de compte associées pour le compte respectif déterminé audit terminal de transaction.

2. Système de communication (30) de la revendication 1, dans lequel ledit au moins un premier dispositif NFC (32) a une identification unique (UID) associée à celui-ci ; et où ledit contrôleur (36) est configuré en outre pour recevoir l'UID à partir dudit au moins un premier dispositif NFC par l'intermédiaire dudit deuxième dispositif NFC (34), pour valider l'UID reçue, et pour déterminer le compte respectif sur la base de la validation de l'UID.

3. Système de communication (30) de la revendication 1, dans lequel la pluralité de différents comptes comprend une pluralité de différents comptes de paiement ; où ledit au moins un premier dispositif NFC (32) a une limite de dépenses associée à celui-ci ; et où ledit contrôleur (36) est configuré en outre pour communiquer des informations de comptes de paiement pour des transactions en-dessous de la limite de dépenses.

4. Système de communication (30) de la revendication 1, dans lequel la pluralité de différents comptes comprend une pluralité de différents comptes de paiement ; et où ledit au moins un premier dispositif NFC (32) comprend une pluralité de premiers dispositifs NFC, chacun associé à une catégorie de comptes de paiement respective différente.

5. Système de communication (30) de la revendication 1, dans lequel le nombre de glissements comprend une pluralité de glissements.

6. Système de communication (30) de la revendication 1, dans lequel la pluralité de différents comptes comprend une pluralité de différents comptes d'accès de sécurité.

7. Système de communication (30) de la revendication 1, dans lequel ledit terminal de transaction (31) est configuré en outre pour communiquer via NFC ; et où ledit contrôleur (36) est configuré pour communiquer les informations de compte associées pour le compte respectif déterminé audit terminal de transaction par l'intermédiaire dudit deuxième dispositif NFC (34).

8. Dispositif de communication sans fil mobile à utiliser avec un terminal de transaction configuré pour effectuer une transaction sur la base de la réception d'informations de comptes et au moins un premier dispositif de communication en champ proche (NFC), le dispositif de communications sans fil mobile comprenant :
un deuxième dispositif NFC configuré pour communiquer avec l'au moins un premier dispositif NFC lorsqu'il est glissé sur celui-ci ;
une mémoire configurée pour stocker des informations de comptes associées à une pluralité de différents comptes, et pour stocker des motifs de glissement de comptes respectifs pour la pluralité de différents comptes, chaque motif de glissement de compte comprenant au moins un élément parmi : une durée au cours de laquelle les premier et deuxième dispositifs NFC restent dans une plage de communication NFC ou un certain nombre de glissements, au moins deux, entre les premier et deuxième dispositifs NFC dans une rangée ; et
un contrôleur couplé à ladite mémoire et audit deuxième dispositif NFC, le contrôleur étant configuré :
pour détecter un motif de glissement,
pour déterminer si le motif de glissement détecté correspond à l'un de la pluralité de motifs de glissement de comptes stockés,
pour déterminer un compte respectif sur la base du motif de glissement de compte stocké correspondant déterminé, et
pour communiquer les informations de compte associées pour le compte respectif déterminé au terminal de transaction.

9. Dispositif de communication sans fil mobile de la revendication 8, dans lequel l'au moins un premier dispositif NFC a une identification unique (UID) associée à celui-ci ; et où ledit contrôleur est configuré en outre pour recevoir l'UID à partir de l'au moins un premier dispositif NFC par l'intermédiaire dudit deuxième dispositif NFC, pour valider l'UID reçue, et pour déterminer le compte respectif sur la base de la validation de l'UID.

10. Dispositif de communication sans fil mobile de la revendication 8, dans lequel la pluralité de différents comptes comprend une pluralité de différents comptes de paiement ; où ledit au moins un premier dispositif NFC a une limite de dépenses associée à celui-ci ; et où ledit contrôleur est configuré en outre pour communiquer des informations de comptes de paiement pour des transactions en-dessous de la limite de dépenses.

11. Dispositif de communication sans fil mobile de la revendication 8, dans lequel la pluralité de différents comptes comprend une pluralité de différents comptes de paiement ; où l'au moins un premier dispositif NFC comprend une pluralité de premiers dispositifs NFC, chacun associé à une catégorie de comptes de paiement respective différente ; et où les catégories de comptes de paiement différentes correspondent à des catégories de comptes de paiement personnelles ou commerciales.

12. Procédé de communication comprenant le fait :
de stocker des informations de comptes associées à une pluralité de différents comptes dans une mémoire d'un dispositif de communications sans fil mobile, et de stocker des motifs de glissement de comptes respectifs pour la pluralité de différents comptes dans la mémoire, chaque motif de glissement de comptes comprenant au moins un élément parmi : une durée au cours de laquelle les premier et deuxième dispositifs NFC restent dans une plage de communication NFC ou un certain nombre de glissements, au moins deux, entre les premier et deuxième dispositifs NFC dans une rangée ;
d'amener le dispositif de communication sans fil mobile à communiquer avec au moins un dispositif de communication en champ proche (NFC) sur la base du glissement sur celui-ci ;
de détecter, au niveau du dispositif de communications sans fil mobile, un motif de glissement avec au moins un dispositif NFC sur la base des communications NFC ;
de déterminer, au niveau du dispositif de communications sans fil mobile, si le motif de glissement détecté correspond à l'un de la pluralité de motifs de glissement de comptes stockés ;
de déterminer, au niveau du dispositif de communications sans fil mobile, un compte respectif sur la base du motif de glissement de compte stocké correspondant déterminé ; et
de communiquer les informations de compte associées pour le compte respectif déterminé à partir du dispositif de communications sans fil mobile à un terminal de transaction.

13. Procédé de la revendication 12, comprenant en outre le fait de faciliter une transaction avec le terminal de transaction sur la base des informations de comptes.

14. Procédé de la revendication 12, dans lequel l'au moins un dispositif NFC a une identification unique (UID) associée à celui-ci ; et comprenant en outre le fait de communiquer l'UID à partir de l'au moins un dispositif NFC au dispositif de communication sans fil mobile et de valider l'UID reçue au niveau du dispositif de communications sans fil mobile ; et où la détermination du compte respectif comprend en outre le fait de déterminer le compte respectif sur la base de la validation de l'UID.

15. Procédé de la revendication 12, dans lequel la pluralité de différents comptes comprend une pluralité de différents comptes de paiement ; où l'au moins un dispositif NFC a une limite de dépenses associée à celui-ci ; et où la communication comprend en outre le fait de communiquer des informations de comptes de paiement pour des transactions en-dessous de la limite de dépenses.
